# EUROPEAN PATENT SPECIFICATION

(11) **EP 3 782 581 B1**
(45) Date of publication and mention of the grant of the patent: **22.03.2023**
(21) Application number: 19791648.9
(22) Date of filing: 26.04.2019
(51) Int. Cl.: A61C 15/02, A46B 9/04, A46B 9/02, A46B 3/04

(54) **INTERDENTAL CLEANING TOOL**
INTERDENTALREINIGUNGSWERKZEUG
OUTIL DE NETTOYAGE INTERDENTAIRE

(30) Priority: 27.04.2018 JP 2018087029
(43) Date of publication of application: 24.02.2021
(73) Proprietor: Kobayashi Pharmaceutical Co., Ltd., Chuo-ku Osaka-shi, Osaka 541-0045 (JP)
(72) Inventor: KIKKAWA, Tasuku, Ibaraki-shi, Osaka 567-0057 (JP)
(74) Representative: Hoffmann Eitle
(86) International application number: PCT/JP2019/017964
(87) International publication number: WO 2019/208778

(56) References cited:
- JP-A- 2015 524 320
- JP-A- 2016 521 159
- JP-A- 2017 042 493
- JP-A- 2017 124 005
- US-A1- 2003 027 101
- US-A1- 2004 121 284

## Description

### Technical Field

The present invention relates to an interdental cleaning tool.

### Background Art

Conventionally, an interdental cleaning tool for cleaning an interdental space is known. For example, WO 2013/176297 A1 discloses an interdental cleaning tool including a base structure portion made of synthetic resin, and a soft portion made of elastomer. The base structure portion includes a core base structure portion having a shape insertable in an interdental space, and a handling base structure portion having a shape that can be held by fingers. The soft portion includes a covering portion that covers an outer circumferential surface of the core base structure portion, and a plurality of protruding portions each protruding outward from the outer circumferential surface of the covering portion. A plurality of protruding portions forms six protruding portion groups. Each protruding portion group includes a plurality of protruding portions arranged along a direction parallel to an axial direction of the core base structure portion. The protruding portion groups are provided at positions distant from each other in the circumferential direction of the covering portion. A plurality of protruding portions of each protruding portion group has a shape whose the protruding length from the covering portion gradually increases from a top end side to a base end side of the core base structure portion.

Further examples of previously known interdental cleaning tools for cleaning interdental spaces are derivable from JP 2015 524320 A, which forms basis for the preamble of independent claim 1, as well as JP 2017 124005 A, JP 2017 42493 A and JP 2016 521159 A. Another example is US 2004/121284 A1 that discloses an interdental cleaning tool mainly made up of a cleaning rod integrally injected into shape of safely edible plastic material, a holding section disposed at the front end of said cleaning rod thereof, and a head brush of relatively slender stick extending at the front of said holding section thereof. Said head brush is equipped with a foremost rounded tip, and a plurality of long and short bristles properly planted in an alternating manner for a certain length thereon. The sectional view of said planted long and short bristles displays a triangular configuration.

### Summary of Invention

### Problems to be Solved by the Invention

Regarding the interdental cleaning tool as described in WO 2013/176297 A1, there are needs for changing a cleaning effect and feeling while cleaning an interdental space and side surfaces of teeth.

An object of the present invention is to provide an interdental cleaning tool that can change a cleaning effect and feeling while cleaning an interdental space and side surfaces of teeth.

### Solution to Problem

To solve the problem described above, the present invention provides an interdental cleaning tool including a base portion including a shaft portion having a shape insertable in an interdental space, and a cleaning portion that covers at least a portion of the shaft portion and is capable of cleaning an interdental space, where the cleaning portion includes a cleaning portion body that covers at least a portion of the shaft portion, and a brush portion provided on an outer circumferential surface of the cleaning portion body, the brush portion includes a first brush group including a plurality of bristles each having a shape protruding outward from the outer circumferential surface of the cleaning portion body in an intersecting direction that intersects an axial direction of the shaft portion, the plurality of bristles being disposed along a direction parallel to the axial direction, and a second brush group having a shape protruding outward in the intersecting direction at a position on the outer circumferential surface of the cleaning portion body which is distant circumferentially from the first brush group, the second brush group including a plurality of bristles which is disposed along the direction parallel to the axial direction, the bristles of the first brush group have shapes whose protruding lengths from the cleaning portion body gradually increase from a top end side to a base end side of the shaft portion, the bristles of the second brush group have shapes whose protruding lengths from the cleaning portion body gradually increase from the top end side to the base end side of the shaft portion, and a protruding length from the cleaning portion body of a predetermined numbered one of bristles of the second brush group from the top end side to the base end side of the shaft portion is larger than a protruding length from the cleaning portion body of the predetermined numbered one of the bristles of the first brush group from the top end side to the base end side of the shaft portion.

The brush portion further includes a third brush group having a shape protruding outward in the intersecting direction at a position on the outer circumferential surface of the cleaning portion body which is distant from the second brush group in the circumferential direction opposite to the first brush group with respect to the second brush group, third brush group including a plurality of bristles which is disposed along the direction parallel to the axial direction, and a fourth brush group having a shape protruding outward in the intersecting direction at a position on the outer circumferential surface of the cleaning portion body which is distant from the third brush group in the circumferential direction opposite to the second brush group with respect to the third brush group, the fourth brush group including a plurality of bristles which is disposed along the direction parallel to the axial direction, the bristles of the third brush group have shapes whose protruding lengths from the cleaning portion body gradually increase from the top end side to the base end side of the shaft portion, the bristles of the fourth brush group have shapes whose protruding lengths from the cleaning portion body gradually increase from the top end side to the base end side of the shaft portion, a protruding length from the cleaning portion body of the predetermined numbered one of the bristles of the third brush group from the top end side to the base end side of the shaft portion is smaller than a protruding length from the cleaning portion body of the predetermined numbered one of the bristles of the second brush group from the top end side to the base end side of the shaft portion, and a protruding length from the cleaning portion body of the predetermined numbered one of the bristles of the fourth brush group from the top end side to the base end side of the shaft portion is larger than a protruding length from the cleaning portion body of the predetermined numbered one of the bristles of the third brush group from the top end side to the base end side of the shaft portion.

Even further, the brush portion includes a fifth brush group having a shape protruding outward in the intersecting direction at a position on the outer circumferential surface of the cleaning portion body which is distant from the fourth brush group in the circumferential direction opposite to the third brush group with respect to the fourth brush group, the fifth brush group including a plurality of bristles which is disposed along the direction parallel to the axial direction, and a sixth brush group having a shape protruding outward in the intersecting direction at a position on the circumferential direction opposite to the fourth brush group with respect to the fifth brush group, the six brush group including a plurality of bristles which is disposed along the direction parallel to the axial direction, the bristles of the fifth brush group have shapes whose protruding lengths from the cleaning portion body gradually increase from the top end side to the base end side of the shaft portion, the bristles of the sixth brush group have shapes whose protruding lengths from the cleaning portion body gradually increase from the top end side to the base end side of the shaft portion, a protruding length from the cleaning portion body of the predetermined numbered one of the bristles of the fifth brush group from the top end side to the base end side of the shaft portion is smaller than a protruding length from the cleaning portion body of the predetermined numbered one of the bristles of the fourth brush group from the top end side to the base end side of the shaft portion, a protruding length from the cleaning portion body of the predetermined numbered one of the bristles of the six brush group from the top end side to the base end side of the shaft portion is larger than a protruding length from the cleaning portion body of the predetermined numbered one of the bristles of the fifth brush group from the top end side to the base end side of the shaft portion, an angle between a direction in which the first brush group protrudes from the cleaning portion body and a direction in which the third brush group protrudes from the cleaning portion body in a normal-to-axis cross-section which is a cross-section normal to the shaft portion, and an angle between a direction in which the third brush group protrudes from the cleaning portion body and a direction in which the fifth brush group protrudes from the cleaning portion body in the normal-to-axis cross-section are from 100 degrees to 140 degrees, inclusive, and an angle between a direction in which the second brush group protrudes from the cleaning portion body and a direction in which the fourth brush group protrudes from the cleaning portion body in the normal-to-axis cross-section, and an angle between a direction in which the fourth brush group protrudes from the cleaning portion body and a direction in which the sixth brush group protrudes from the cleaning portion body in the normal-to-axis cross-section are from 100 degrees to 140 degrees, inclusive.

Since the interdental cleaning tool includes the first brush group having the relatively small protruding length from the cleaning portion body and the second brush group having the relatively large protruding length from the cleaning portion body, it is able to make different brush groups contact the interdental space, the gum, and the like while cleaning using the interdental cleaning tool by rotating the base portion about the axis of the shaft portion. Thus, the cleaning effect and feeling can be changed by switching between the interdental cleaning tool being inserted and extracted through the interdental space under a condition where the bristles of the first brush group are in contact with the teeth and the gum, and the interdental cleaning tool being inserted and extracted through the interdental space under a condition where the bristles of the second brush group are in contact with the teeth and the gum.

With the configuration, the bristles having the relatively small protruding lengths from the cleaning portion body and the bristles having the relatively large protruding lengths from the cleaning portion body alternately contact the teeth and the gum by rotating the shaft portion about the axis while cleaning. Thus, the cleaning effect and feeling can be effectively changed.

In the configuration, the space formed by adjacent teeth and gum (so-called triangular space) can be effectively cleaned with the first brush group, the third brush group, and the fifth brush group or with the second brush group, the fourth brush group, and the sixth brush group.

Furthermore, it is preferable that specific numbered bristles of the brush groups from the top end side to the base end side of the shaft portion are spirally arranged on the outer circumferential surface of the cleaning portion body.

With the configuration, the cleaning performance can be improved without deteriorating insertion capability.

Furthermore, the cleaning portion is preferably made of a composite material containing elastomer and a reinforcing material.

Using such a material, the bristles are given a higher rigidity than when the cleaning portion is made only of elastomer, so that the side surfaces of the teeth can be effectively cleaned.

### Advantageous Effects of Invention

According to the present invention as described above, an interdental cleaning tool that can change a cleaning effect and feeling while cleaning an interdental space and side surfaces of teeth can be provided.

### Brief Description of Drawings

FIG. 1 is a front view of an interdental cleaning tool according to an embodiment of the present invention.
FIG. 2 is an enlarged view of a cleaning portion of the interdental cleaning tool illustrated in FIG. 1.
FIG. 3 is a plan view of the interdental cleaning tool illustrated in FIG. 1.

### Description of Embodiment

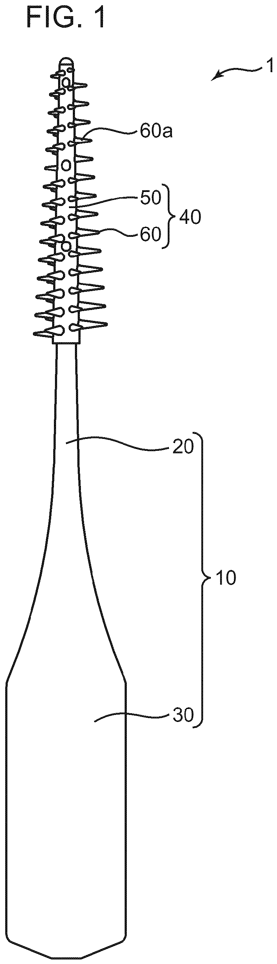

An interdental cleaning tool 1 according to an embodiment of the present invention will be described with reference to FIGS. 1 to 3. As illustrated in FIG. 1, the interdental cleaning tool 1 includes a base portion 10, and a cleaning portion 40.

The base portion 10 is made of a synthetic resin such as polypropylene, polyethylene, ABS, polybutylene terephthalate, polycarbonate, polyethylene terephthalate, polystyrene, and polyacetal. In the embodiment, the base portion 10 is made of polypropylene containing glass fibers by 30% by weight. The base portion 10 includes a shaft portion 20, and a grip portion 30.

The shaft portion 20 has a shape extending in a specific direction (up-and-down direction in FIG. 1) and insertable in an interdental space. The shaft portion 20 has a shape whose a profile of the cross-section of the shaft portion 20 in a plane normal to an axial direction of the shaft portion 20 (the up-and-down direction in FIG. 1) gradually increases from a top end side to a base end side (opposite the top end side) of the shaft portion 20. In the embodiment, the cross-section of the shaft portion 20 in the plane is a circle. That is, in the embodiment, the shaft portion 20 has a form of a column of which outer diameter gradually decreases from a base end portion to a top end portion of the shaft portion 20. The cross-section of the shaft portion 20 may be an oval shape or a polygonal shape.

The grip portion 30 extends in the axial direction of the shaft portion 20 away from the base end portion of the shaft portion 20 and has a shape that can be held by fingers. The grip portion 30 has a flat shape.

The cleaning portion 40 is for cleaning the interdental space and the side surfaces of the teeth. The cleaning portion 40 is made of a resin material having a lower hardness than the base portion 10. Specifically, styrene elastomer is used as the resin material. Other materials, such as silicone, olefinic elastomer, and polyester elastomer, may also be used as the resin material. The cleaning portion 40 includes a cleaning portion body 50, and a brush portion 60.

The cleaning portion body 50 covers at least a portion of the shaft portion 20 (portion including the top end portion of the shaft portion 20). The cleaning portion body 50 has a shape of which profile gradually becomes larger from the top end side to the base end side of the shaft portion 20.

The brush portion 60 is provided on the outer circumferential surface of the cleaning portion body 50. The brush portion 60 includes a plurality of bristles 60a each having a shape protruding outward from the outer circumferential surface of the cleaning portion body 50 in an intersecting direction that intersects the axial direction. A plurality of bristles 60a constitute a plurality of (six, in the embodiment) brush groups 61 to 66.

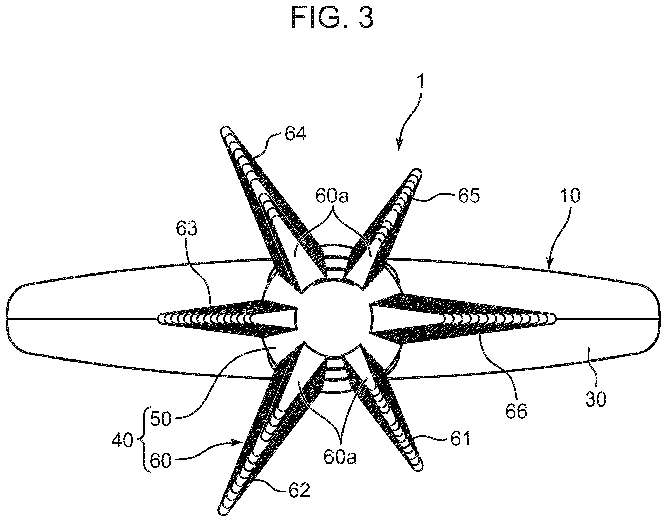

Each of the brush groups 61 to 66 includes a plurality of bristles 60a arranged along a direction parallel to the axial direction. As illustrated in FIG. 3, the second brush group 62 is provided at a position on the outer circumferential surface of the cleaning portion body 50, the position being distant from the first brush group 61 in the circumferential direction of the cleaning portion body 50. The third brush group 63 is provided at a position on the outer circumferential surface of the cleaning portion body 50, the position being distant from the second brush group in the circumferential direction of the cleaning portion body 50 opposite to the first brush group 61 with reference to the second brush group 62. The fourth brush group 64 is provided at a position on the outer circumferential surface of the cleaning portion body 50, the position being distant from the third brush group 63 in the circumferential direction of the cleaning portion body 50 opposite to the second brush group 62 with reference to the third brush group 63. The fifth brush group 65 is provided at a position on the outer circumferential surface of the cleaning portion body 50, the position being distant from the fourth brush group 64 in the circumferential direction of the cleaning portion body 50 opposite to the third brush group 63 with reference to the fourth brush group 64. The sixth brush group 66 is provided at a position on the outer circumferential surface of the cleaning portion body 50, the position being distant from the fifth brush group 65 in the circumferential direction of the cleaning portion body 50 opposite to the fourth brush group 64 with reference to the fifth brush group 65 (is in between the first brush group 61 and the fifth brush group 65 in the circumferential direction).

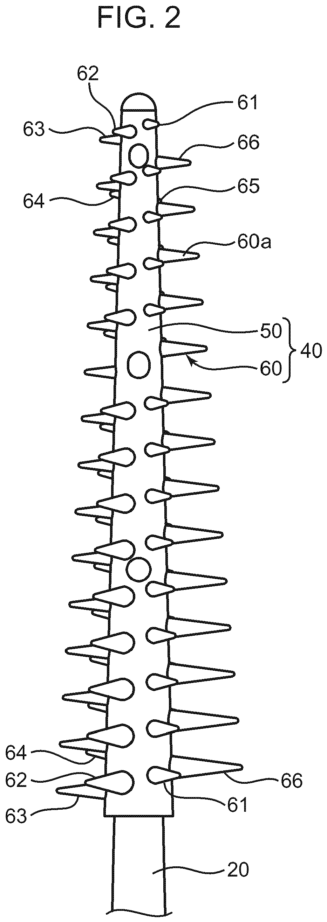

As illustrated in FIG. 2, the bristles 60a have shapes whose the protruding lengths from the cleaning portion body 50 gradually increase from the top end side to the base end side of the shaft portion 20. In the embodiment, the bristles 60a each has a form of a cone.

An angle between a direction in which the first brush group 61 protrudes from the cleaning portion body 50 and a direction in which the third brush group 63 protrudes from the cleaning portion body 50 in a normal-to-axis cross-section which is normal to the shaft portion 20, and an angle between the direction in which the third brush group 63 protrudes from the cleaning portion body 50 and a direction in which the fifth brush group 65 protrudes from the cleaning portion body 50 in the normal-to-axis cross-section are preferably from 100 degrees to 140 degrees, inclusive, more preferably from 110 degrees to 130 degrees, inclusive, and further more preferably 120 degrees, inclusive. An angle between a direction in which the second brush group 62 protrudes from the cleaning portion body 50 and a direction in which the fourth brush group 64 protrudes from the cleaning portion body 50 in the normal-to-axis cross-section, and an angle between the direction in which the fourth brush group 64 protrudes from the cleaning portion body 50 and a direction in which the sixth brush group 66 protrudes from the cleaning portion body 50 in the normal-to-axis cross-section are preferably from 100 degrees to 140 degrees, inclusive, more preferably from 110 degrees to 130 degrees, inclusive, and further more preferably 120 degrees. In the embodiment, the angle between the direction in which the first brush group 61 protrudes from the cleaning portion body 50 and the direction in which the second brush group 62 protrudes from the cleaning portion body 50 in the normal-to-axis cross-section is 60 degrees. The directions in which the brush groups 61 to 66 protrude from the cleaning portion body 50 respectively mean the directions from the center of the shaft portion 20 toward the respective top ends of the bristles 60a of the brush groups 61 to 66 in the normal-to-axis cross-section.

As illustrated in FIGS. 2 and 3, the protruding length from the cleaning portion body 50 of a predetermined numbered one of the bristles 60a of the second brush group 62 from the top end side to the base end side of the shaft portion 20 (hereinafter referred to as "second protruding length") is larger than the protruding length from the cleaning portion body 50 of the predetermined numbered one of the bristles 60a of the first brush group 61 from the top end side to the base end side of the shaft portion 20 (hereinafter referred to as "first protruding length"). A ratio of the second protruding length to the first protruding length is preferably from 105% to 300%, inclusive, more preferably from 110% to 200%, inclusive.

The protruding length from the cleaning portion body 50 of the predetermined numbered one of the bristles 60a of the third brush group 63 from the top end side to the base end side of the shaft portion 20 (hereinafter referred to as "third protruding length") is smaller than the protruding length from the cleaning portion body 50 of the predetermined numbered one of the bristles 60a of the second brush group 62 from the top end side to the base end side of the shaft portion 20 (hereinafter referred to as "second protruding length"). A ratio of the third protruding length to the second protruding length is preferably from 33% to 95%, inclusive, more preferably from 50% to 91%, inclusive.

The protruding length from the cleaning portion body 50 of the predetermined numbered one of the bristles 60a of the fourth brush group 64 from the top end side to the base end side of the shaft portion 20 (hereinafter referred to as "fourth protruding size") is larger than the protruding length from the cleaning portion body 50 of the predetermined numbered one of the bristles 60a of the third brush group 63 from the top end side to the base end side of the shaft portion 20 (hereinafter referred to as "third protruding length"). A ratio of the fourth protruding length to the third protruding length is preferably from 105% to 300%, inclusive, more preferably from 110% to 200%, inclusive.

The protruding length from the cleaning portion body 50 of the predetermined numbered one of the bristles 60a of the fifth brush group 65 from the top end side to the base end side of the shaft portion 20 (hereinafter referred to as "fifth protruding length") is smaller than the protruding length from the cleaning portion body 50 of the predetermined numbered one of the bristles 60a of the fourth brush group 64 from the top end side to the base end side of the shaft portion 20 (hereinafter referred to as "fourth protruding length"). A ratio of the fifth protruding length to the fourth protruding length is preferably from 33% to 95%, inclusive, more preferably from 50% to 91%, inclusive.

The protruding length from the cleaning portion body 50 of the predetermined numbered one of the bristles 60a of the six brush group 66 from the top end side to the base end side of the shaft portion 20 (hereinafter referred to as "sixth protruding length") is larger than the protruding length from the cleaning portion body 50 of the predetermined numbered one of the bristles 60a of the fifth brush group 65 from the top end side to the base end side of the shaft portion 20 (hereinafter referred to as "fifth protruding length"). A ratio of the sixth protruding length to the fifth protruding length is preferably from 105% to 300%, inclusive, more preferably from 110% to 200%, inclusive.

Specific numbered bristles 60a of the brush groups 61 to 66 from the top end side to the base end side of the shaft portion 20 are spirally arranged on the outer circumferential surface of the cleaning portion body 50. The protruding length from the cleaning portion body 50 of the specific numbered bristle 60a of the third brush group 63 from the top end side to the base end side of the shaft portion 20 is larger than the protruding length from the cleaning portion body 50 of the specific numbered bristle 60a of the first brush group 61 from the top end side to the base end side of the shaft portion 20. The protruding length from the cleaning portion body 50 of the specific numbered bristle 60a of the fifth brush group 65 from the top end side to the base end side of the shaft portion 20 is larger than the protruding length from the cleaning portion body 50 of the specific numbered bristle 60a of the third brush group 63 from the top end side to the base end side of the shaft portion 20. The protruding length from the cleaning portion body 50 of the specific numbered bristle 60a of the fourth brush group 64 from the top end side to the base end side of the shaft portion 20 is larger than the protruding length from the cleaning portion body 50 of the specific numbered bristle 60a of the second brush group 62 from the top end side to the base end side of the shaft portion 20. The protruding length from the cleaning portion body 50 of the specific numbered bristle 60a of the sixth brush group 66 from the top end side to the base end side of the shaft portion 20 is larger than the protruding length from the cleaning portion body 50 of the specific numbered bristle 60a of the fourth brush group 65 from the top end side to the base end side of the shaft portion 20. The protruding length from the cleaning portion body 50 of the bristle 60a of the first brush group 61 which is situated next to the specific numbered bristle 60a from the top end side to the base end side of the shaft portion 20 is smaller than the protruding length from the cleaning portion body 50 of the specific numbered bristle 60a of the sixth brush group 66 from the top end side to the base end side of the shaft portion 20. As illustrated in FIGS. 1 to 3, the 6^{th} bristle of the first brush group 61 from the top end side to the base end side of the shaft portion 20, the 6^{th} bristle of the second brush group 62 from the top end side to the base end side of the shaft portion 20, the 1^{st} and 6^{th} bristles of the fourth brush group 64 from the top end side to the base end side of the shaft portion 20, and the 1^{st} and 6^{th} bristles of the fifth brush group 65 from the top end side to the base end side of the shaft portion 20 may be omitted.

As described above, the interdental cleaning tool 1 of the present embodiment includes the first brush group 61 having the relatively small protruding length from the cleaning portion body 50, and the second brush group 62 having the relatively large protruding length, so that it is able to make different brush groups contact the interdental space, the gum, and the like while cleaning using the interdental cleaning tool 1 by rotating the base portion 10 about the axis of the shaft portion 20. Thus, the cleaning effect and feeling can be changed by switching between the interdental cleaning tool 1 being inserted and extracted through the interdental space under a condition where the bristles 60a of the first brush group 61 are in contact with the teeth and the gum and the interdental cleaning tool 1 being inserted and extracted through the interdental space under a condition where the bristles 60a of the second brush group 62 are in contact with the teeth and the gum.

Since the interdental cleaning tool 1 includes the third brush group 63, the fourth brush group 64, the fifth brush group 65, and the sixth brush group 66, the bristles 60a having the relatively small protruding lengths from the cleaning portion body 50 and the bristles 60a having the relatively large protruding lengths from the cleaning portion body 50 alternately contact the teeth and the gum by rotating the shaft portion 20 about the axis while cleaning. Thus, the cleaning effect and feeling can effectively be changed.

Furthermore, the angle between the direction in which the first brush group 61 protrudes from the cleaning portion body 50 and the direction in which the third brush group 63 protrudes from the cleaning portion body 50 in the normal-to-axis cross-section, and the angle between the direction in which the third brush group 63 protrudes from the cleaning portion body 50 and the direction in which the fifth brush group 65 protrudes from the cleaning portion body 50 in the normal-to-axis cross-section are 120 degrees, and the angle between the direction in which the second brush group 62 protrudes from the cleaning portion body 50 and the direction in which the fourth brush group 64 protrudes from the cleaning portion body 50 in the normal-to-axis cross-section, and the angle between the direction in which the fourth brush group 64 protrudes from the cleaning portion body 50 and the direction in which the sixth brush group 66 protrudes from the cleaning portion body 50 in the normal-to-axis cross-section are 120 degrees. Thus, the space formed by adjacent teeth and a gum (so-called a triangular space) can be effectively cleaned with the first brush group 61, the third brush group 63, and the fifth brush group 65 or with the second brush group 62, the fourth brush group 64, and the sixth brush group 66.

Note that the embodiment disclosed above should be considered as illustrative in all aspects and not by means of limitation. The scope of the present invention is defined by the claims, not by the description on the embodiment described above, and includes all alterations within the scope of the claims.

For example, the number of brush groups included in the brush portion 60 is not limited to six as long as the number is not smaller than two. For example, the number of the brush groups may be eight.

The first brush group 61, the third brush group 63, and the fifth brush group 65 may have the same shape (size). Similarly, the second brush group 62, the fourth brush group 64, and the sixth brush group 66 may have the same shape (size).

Furthermore, the angle between the direction in which the first brush group 61 protrudes from the cleaning portion body 50 and the direction in which the second brush group 62 protrudes from the cleaning portion body 50 in the normal-to-axis cross-section is not limited to 60 degrees.

The bristle 60a may have a shape of a polygonal pyramid or a plate (flat shape).

The cleaning portion 40 may be made of a composite material containing a resin material and a reinforcing material (for example, glass fibers or talc). Using such a material, the bristles 60a are given a higher rigidity than when the cleaning portion 40 is made only of elastomer, so that the side surfaces of the teeth can be effectively cleaned. In this case, the composite material preferably contains the reinforcing material by 1% by weight to 30% by weight, inclusive, more preferably 3% by weight to 20% by weight, inclusive.

### Reference Signs

- 1: interdental cleaning tool
- 10: base portion
- 20: shaft portion
- 30: grip portion
- 40: cleaning portion
- 50: cleaning portion body
- 60: brush portion
- 61: first brush group
- 62: second brush group
- 63: third brush group
- 64: fourth brush group
- 65: fifth brush group
- 66: sixth brush group

## Claims

1. An interdental cleaning tool (1) comprising:
a base portion (10) including a shaft portion (20) having a shape insertable in an interdental space; and
a cleaning portion (40) that covers at least a portion of the shaft portion (20) and is capable of cleaning an interdental space,
wherein
the cleaning portion (40) includes:
a cleaning portion body (50) that covers at least a portion of the shaft portion (20), and
a brush portion (60) provided on an outer circumferential surface of the cleaning portion body (50),
the brush portion (60) includes:
a first brush group (61) including a plurality of bristles each having a shape protruding outward from the outer circumferential surface of the cleaning portion body (50) in an intersecting direction that intersects an axial direction of the shaft portion (20), the plurality of bristles being disposed along a direction parallel to the axial direction, and
a second brush group (62) having a shape protruding outward in the intersecting direction at a position on the outer circumferential surface of the cleaning portion body (50) which is distant circumferentially from the first brush group (61), the second brush group (62) including a plurality of bristles which is disposed along the direction parallel to the axial direction,
the bristles of the first brush group (61) have shapes whose protruding lengths from the cleaning portion body (50) gradually increase from a top end side to a base end side of the shaft portion (20),
the bristles of the second brush group (62) have shapes whose protruding lengths from the cleaning portion body (50) gradually increase from the top end side to the base end side of the shaft portion (20), and
a protruding length from the cleaning portion body (50) of a predetermined numbered one of the bristles of the second brush group (62) from the top end side to the base end side of the shaft portion (20) is larger than a protruding length from the cleaning portion body (50) of the predetermined numbered one of the bristles of the first brush group (61) from the top end side to the base end side of the shaft portion (20), wherein
the brush portion (60) further includes:
a third brush group (63) having a shape protruding outward in the intersecting direction at a position on the outer circumferential surface of the cleaning portion body (50) which is distant from the second brush group (62) in the circumferential direction opposite to the first brush group (61) with respect to the second brush group (62), the third brush group (63) including a plurality of bristles which is disposed along the direction parallel to the axial direction, and
a fourth brush group (64) having a shape protruding outward in the intersecting direction at a position on the outer circumferential surface of the cleaning portion body (50) which is distant from the third brush group (63) in the circumferential direction opposite to the second brush group (62) with respect to the third brush group (63), the fourth brush group (64) including a plurality of bristles which is disposed along the direction parallel to the axial direction,
the bristles of the third brush group (63) have shapes whose protruding lengths from the cleaning portion body (50) gradually increase from the top end side to the base end side of the shaft portion (20),
the bristles of the fourth brush group (64) have shapes whose protruding lengths from the cleaning portion body (50) gradually increase from the top end side to the base end side of the shaft portion (20),
a protruding length from the cleaning portion body (50) of the predetermined numbered one of the bristles of the third brush group (63) from the top end side to the base end side of the shaft portion (20) is smaller than a protruding length from the cleaning portion body (50) of the predetermined numbered one of the bristles of the second brush group (62) from the top end side to the base end side of the shaft portion (20), and
a protruding length from the cleaning portion body (50) of the predetermined numbered one of the bristles of the fourth brush group (64) from the top end side to the base end side of the shaft portion (20) is larger than a protruding length from the cleaning portion body (50) of the predetermined numbered one of the bristles of the third brush group (63) from the top end side to the base end side of the shaft portion (20),
**characterized in that**
the brush portion (60) further includes:
a fifth brush group (65) having a shape protruding outward in the intersecting direction at a position on the outer circumferential surface of the cleaning portion body (50) which is distant from the fourth brush group (64) in the circumferential direction opposite to the third brush group (63) with respect to the fourth brush group (64), the fifth brush group (65) including a plurality of bristles which is disposed along the direction parallel to the axial direction, and
a sixth brush group (66) having a shape protruding outward in the intersecting direction at a position on the outer circumferential surface of the cleaning portion body (50) which is distant from the fifth brush group (65) in the circumferential direction opposite to the fourth brush group (64) with respect to the fifth brush group (65), the sixth brush group (66) including a plurality of bristles which is disposed along the direction parallel to the axial direction,
the bristles of the fifth brush group (65) have shapes whose protruding lengths from the cleaning portion body (50) gradually increase from the top end side to the base end side of the shaft portion (20),
the bristles of the sixth brush group (66) have shapes whose protruding lengths from the cleaning portion body (50) gradually increase from the top end side to the base end side of the shaft portion (20),
a protruding length from the cleaning portion body (50) of the predetermined numbered one of the bristles of the fifth brush group (65) from the top end side to the base end side of the shaft portion (20) is smaller than a protruding length from the cleaning portion body (50) of the predetermined numbered one of the bristles of the fourth brush group (64) from the top end side to the base end side of the shaft portion (20),
a protruding length from the cleaning portion body (50) of the predetermined numbered one of the bristles of the sixth brush group (66) from the top end side to the base end side of the shaft portion (20) is larger than a protruding length from the cleaning portion body (50) of the predetermined numbered one of the bristles of the fifth brush group (65) from the top end side to the base end side of the shaft portion (20),
an angle between a direction in which the first brush group (61) protrudes from the cleaning portion body (50) and a direction in which the third brush group (63) protrudes from the cleaning portion body (50) in a normal-to-axis cross-section which is a cross-section normal to the shaft portion (20), and an angle between a direction in which the third brush group (63) protrudes from the cleaning portion body (50) and a direction in which the fifth brush group (65) protrudes from the cleaning portion body (50) in the normal-to-axis cross-section are from 100 degrees to 140 degrees, inclusive, and
an angle between a direction in which the second brush group (62) protrudes from the cleaning portion body (50) and a direction in which the fourth brush group (64) protrudes from the cleaning portion body (50) in the normal-to-axis cross-section, and an angle between a direction in which the fourth brush group (64) protrudes from the cleaning portion body (50) and a direction in which the sixth brush group (66) protrudes from the cleaning portion body (50) in the normal-to-axis cross-section are from 100 degrees to 140 degrees, inclusive.

2. The interdental cleaning tool (1) according to claim 1, wherein
specific numbered bristles of the brush groups from the top end side to the base end side of the shaft portion (20) are spirally arranged on the outer circumferential surface of the cleaning portion body (50).

3. The interdental cleaning tool (1) according to claim 1or 2, wherein
the cleaning portion (40) is made of a composite material containing elastomer and a reinforcing material.

## Patentansprüche

1. Instrument zur Zahnzwischenraumreinigung (1), umfassend:
einen unteren Teil (10), der einen Schaftabschnitt (20) einschließt, der eine in einen Zahnzwischenraum einführbare Form aufweist; und
einen Reinigungsabschnitt (40), der mindestens einen Abschnitt des Schaftabschnitts (20) bedeckt und in der Lage ist, einen Zahnzwischenraum zu reinigen,
wobei
der Reinigungsabschnitt (40) Folgendes einschließt:
einen Reinigungsabschnittskörper (50), der mindestens einen Abschnitt des Schaftabschnitts (20) bedeckt, und
einen Bürstenabschnitt (60), der auf einer Außenumfangsoberfläche des Reinigungsabschnittskörpers (50) bereitgestellt ist,
wobei der Bürstenabschnitt (60) Folgendes einschließt:
eine erste Bürstengruppe (61), die eine Vielzahl von Borsten einschließt, die jeweils eine Form aufweisen, die von der Außenumfangsoberfläche des Reinigungsabschnittskörpers (50) in eine Kreuzungsrichtung, die eine axiale Richtung des Schaftabschnitts (20) kreuzt, nach außen hervorragt, wobei die Vielzahl von Borsten entlang einer parallel zur axialen Richtung verlaufenden Richtung eingerichtet ist, und
eine zweite Bürstengruppe (62), die eine Form aufweist, die an einer Position auf der Außenumfangsoberfläche des Reinigungsabschnittskörpers (50) in die Kreuzungsrichtung nach außen hervorragt, die von der ersten Bürstengruppe (61) zirkumferenziell entfernt ist, wobei die zweite Bürstengruppe (62) eine Vielzahl von Borsten einschließt, die entlang der parallel zur axialen Richtung verlaufenden Richtung eingerichtet sind,
wobei die Borsten der ersten Bürstengruppe (61) Formen aufweisen, deren hervorragende Längen vom Reinigungsabschnittskörper (50) schrittweise von einer Seite des oberen Endes zu einer Seite des unteren Endes des Schaftabschnitts (20) zunehmen,
die Borsten der zweiten Bürstengruppe (62) Formen aufweisen, deren hervorragende Längen vom Reinigungsabschnittskörper (50) schrittweise von der Seite des oberen Endes zur Seite des unteren Endes des Schaftabschnitts (20) zunehmen, und
eine hervorragende Länge vom Reinigungsabschnittskörper (50) einer vorgegebenen nummerierten der Borsten der zweiten Bürstengruppe (62) von der Seite des oberen Endes zur Seite des unteren Endes des Schaftabschnitts (20) größer ist als eine hervorragende Länge vom Reinigungsabschnittskörper (50) der vorgegebenen nummerierten der Borsten der ersten Bürstengruppe (61) von der Seite des oberen Endes zur Seite des unteren Endes des Schaftabschnitts (20), wobei
der Bürstenabschnitt (60) weiter Folgendes einschließt:
eine dritte Bürstengruppe (63), die eine Form aufweist, die an einer Position auf der Außenumfangsoberfläche des Reinigungsabschnittskörpers (50) in die Kreuzungsrichtung nach außen hervorragt, die von der zweiten Bürstengruppe (62) in der Umfangsrichtung gegenüber der ersten Bürstengruppe (61) in Bezug auf die zweite Bürstengruppe (62) entfernt ist, wobei die dritte Bürstengruppe (63) eine Vielzahl von Borsten einschließt, die entlang einer parallel zur axialen Richtung verlaufenden Richtung eingerichtet sind, und
eine vierte Bürstengruppe (64), die eine Form aufweist, die an einer Position auf der Außenumfangsoberfläche des Reinigungsabschnittskörpers (50) in die Kreuzungsrichtung nach außen hervorragt, die von der dritten Bürstengruppe (63) in der Umfangsrichtung gegenüber der zweiten Bürstengruppe (62) in Bezug auf die dritte Bürstengruppe (63) entfernt ist, wobei die vierte Bürstengruppe (64) eine Vielzahl von Borsten einschließt, die entlang der parallel zur axialen Richtung verlaufenden Richtung eingerichtet sind,
die Borsten der dritten Bürstengruppe (63) Formen aufweisen, deren hervorragende Längen vom Reinigungsabschnittskörper (50) schrittweise von der Seite des oberen Endes zur Seite des unteren Endes des Schaftabschnitts (20) zunehmen,
die Borsten der vierten Bürstengruppe (64) Formen aufweisen, deren hervorragende Längen vom Reinigungsabschnittskörper (50) schrittweise von der Seite des oberen Endes zur Seite des unteren Endes des Schaftabschnitts (20) zunehmen,
eine hervorragende Länge vom Reinigungsabschnittskörper (50) einer vorgegebenen nummerierten der Borsten der dritten Bürstengruppe (63) von der Seite des oberen Endes zur Seite des unteren Endes des Schaftabschnitts (20) kleiner ist als eine hervorragende Länge vom Reinigungsabschnittskörper (50) der vorgegebenen nummerierten der Borsten der zweiten Bürstengruppe (62) von der Seite des oberen Endes zur Seite des unteren Endes des Schaftabschnitts (20), und
eine hervorragende Länge vom Reinigungsabschnittskörper (50) der vorgegebenen nummerierten der Borsten der vierten Bürstengruppe (64) von der Seite des oberen Endes zur Seite des unteren Endes des Schaftabschnitts (20) größer ist als eine hervorragende Länge vom Reinigungsabschnittskörper (50) der vorgegebenen nummerierten der Borsten der dritten Bürstengruppe (63) von der Seite des oberen Endes zur Seite des unteren Endes des Schaftabschnitts (20),
**dadurch gekennzeichnet, dass**
der Bürstenabschnitt (60) weiter Folgendes einschließt:
eine fünfte Bürstengruppe (65), die eine Form aufweist, die an einer Position auf der Außenumfangsoberfläche des Reinigungsabschnittskörpers (50) in die Kreuzungsrichtung nach außen hervorragt, die von der vierten Bürstengruppe (64) in der Umfangsrichtung gegenüber der dritten Bürstengruppe (63) in Bezug auf die vierte Bürstengruppe (64) entfernt ist, wobei die fünfte Bürstengruppe (65) eine Vielzahl von Borsten einschließt, die entlang der parallel zur axialen Richtung verlaufenden Richtung eingerichtet sind, und
eine sechste Bürstengruppe (66), die eine Form aufweist, die an einer Position auf der Außenumfangsoberfläche des Reinigungsabschnittskörpers (50) in die Kreuzungsrichtung nach außen hervorragt, die von der fünften Bürstengruppe (65) in der Umfangsrichtung gegenüber der vierten Bürstengruppe (64) in Bezug auf die fünfte Bürstengruppe (65) entfernt ist, wobei die sechste Bürstengruppe (66) eine Vielzahl von Borsten einschließt, die entlang der parallel zur axialen Richtung verlaufenden Richtung eingerichtet sind,
die Borsten der fünften Bürstengruppe (65) Formen aufweisen, deren hervorragende Längen vom Reinigungsabschnittskörper (50) schrittweise von der Seite des oberen Endes zur Seite des unteren Endes des Schaftabschnitts (20) zunehmen,
die Borsten der sechsten Bürstengruppe (66) Formen aufweisen, deren hervorragende Längen vom Reinigungsabschnittskörper (50) schrittweise von der Seite des oberen Endes zur Seite des unteren Endes des Schaftabschnitts (20) zunehmen,
eine hervorragende Länge vom Reinigungsabschnittskörper (50) der vorgegebenen nummerierten der Borsten der fünften Bürstengruppe (65) von der Seite des oberen Endes zur Seite des unteren Endes des Schaftabschnitts (20) kleiner ist als eine hervorragende Länge vom Reinigungsabschnittskörper (50) der vorgegebenen nummerierten der Borsten der vierten Bürstengruppe (64) von der Seite des oberen Endes zur Seite des unteren Endes des Schaftabschnitts (20),
eine hervorragende Länge vom Reinigungsabschnittskörper (50) der vorgegebenen nummerierten der Borsten der sechsten Bürstengruppe (66) von der Seite des oberen Endes zur Seite des unteren Endes des Schaftabschnitts (20) größer ist als eine hervorragende Länge vom Reinigungsabschnittskörper (50) der vorgegebenen nummerierten der Borsten der Borsten der fünften Bürstengruppe (65) von der Seite des oberen Endes zur Seite des unteren Endes des Schaftabschnitts (20),
ein Winkel zwischen einer Richtung, in die die erste Bürstengruppe (61) vom Reinigungsabschnittskörper (50) hervorragt, und einer Richtung, in die die dritte Bürstengruppe (63) vom Reinigungsabschnittskörper (50) hervorragt, in einem senkrecht zur Achse gebildeten Querschnitt, der ein senkrecht zum Schaftabschnitt (20) gebildeter Querschnitt ist, und ein Winkel zwischen einer Richtung, in die die dritte Bürstengruppe (63) vom Reinigungsabschnittskörper (50) hervorragt, und einer Richtung, in die die fünfte Bürstengruppe (65) vom Reinigungsabschnittskörper (50) hervorragt, in dem senkrecht zur Achse gebildeten Querschnitt 100 Grad bis einschließlich 140 Grad betragen und
ein Winkel zwischen einer Richtung, in die die zweite Bürstengruppe (62) vom Reinigungsabschnittskörper (50) hervorragt, und einer Richtung, in die die vierte Bürstengruppe (64) vom Reinigungsabschnittskörper (50) hervorragt, in dem senkrecht zur Achse gebildeten Querschnitt und ein Winkel zwischen einer Richtung, in die die vierte Bürstengruppe (64) vom Reinigungsabschnittskörper (50) hervorragt, und einer Richtung, in die die sechste Bürstengruppe (66) vom Reinigungsabschnittskörper (50) hervorragt, in dem senkrecht zur Achse gebildeten Querschnitt 100 Grad bis einschließlich 140 Grad betragen.

2. Instrument zur Zahnzwischenraumreinigung (1) nach Anspruch 1, wobei
spezifische nummerierte Borsten der Bürstengruppen von der Seite des oberen Endes zur Seite des unteren Endes des Schaftabschnitts (20) auf der Außenumfangsoberfläche des Reinigungsabschnittskörpers (50) spiralförmig angeordnet sind.

3. Instrument zur Zahnzwischenraumreinigung (1) nach Anspruch 1 oder 2, wobei
der Reinigungsabschnitt (40) aus einem Verbundmaterial hergestellt ist, das Elastomer und ein Verstärkungsmaterial enthält.

## Revendications

1. Instrument de nettoyage interdentaire (1) comprenant :
une partie de base (10) incluant une partie formant tige (20) présentant une forme pouvant être insérée dans un espace interdentaire ; et
une partie de nettoyage (40) qui recouvre au moins une partie de la partie formant tige (20) et qui est capable de nettoyer un espace interdentaire,
dans lequel
la partie de nettoyage (40) inclut :
un corps de partie de nettoyage (50) qui recouvre au moins une partie de la partie formant tige (20), et
une partie formant brosse (60) prévue sur une surface circonférentielle extérieure du corps de partie de nettoyage (50),
la partie formant brosse (60) inclut :
un premier groupe de brosses (61) incluant une pluralité de poils présentant chacun une forme faisant saillie vers l'extérieur depuis la surface circonférentielle extérieure du corps de partie de nettoyage (50) dans une direction d'intersection qui coupe une direction axiale de la partie formant tige (20), la pluralité de poils étant disposés suivant une direction parallèle à la direction axiale, et
un deuxième groupe de brosses (62) présentant une forme faisant saillie vers l'extérieur dans la direction d'intersection à une position située sur la surface circonférentielle extérieure du corps de partie de nettoyage (50) qui est éloigné circonférentiellement du premier groupe de brosses (61), le deuxième groupe de brosses (62) incluant une pluralité de poils qui sont disposés suivant la direction parallèle à la direction axiale,
les poils du premier groupe de brosses (61) présentent des formes dont les longueurs saillantes depuis le corps de partie de nettoyage (50) augmentent progressivement d'un côté d'extrémité supérieure à un côté d'extrémité inférieure de la partie formant tige (20),
les poils du deuxième groupe de brosses (62) présentent des formes dont les longueurs saillantes depuis le corps de partie de nettoyage (50) augmentent progressivement du côté d'extrémité supérieure au côté d'extrémité inférieure de la partie formant tige (20), et
une longueur saillante depuis le corps de partie de nettoyage (50) d'un poil numéroté prédéterminé parmi les poils du deuxième groupe de brosses (62) du côté d'extrémité supérieure au côté d'extrémité inférieure de la partie formant tige (20) est supérieure à une longueur saillante depuis le corps de partie de nettoyage (50) du poil numéroté prédéterminé parmi les poils du premier groupe de brosses (61) allant du côté d'extrémité supérieure au côté d'extrémité inférieure de la partie formant tige (20), dans lequel
la partie formant brosse (60) inclut en outre :
un troisième groupe de brosses (63) présentant une forme faisant saillie vers l'extérieur dans la direction d'intersection à une position située sur la surface circonférentielle extérieure du corps de partie de nettoyage (50) qui est éloigné du deuxième groupe de brosses (62) dans la direction circonférentielle opposée au premier groupe de brosses (61) par rapport au deuxième groupe de brosses (62), le troisième groupe de brosses (63) incluant une pluralité de poils qui sont disposés suivant la direction parallèle à la direction axiale, et
un quatrième groupe de brosses (64) présentant une forme faisant saillie vers l'extérieur dans la direction d'intersection à une position située sur la surface circonférentielle extérieure du corps de partie de nettoyage (50) qui est éloigné du troisième groupe de brosses (63) dans la direction circonférentielle opposée au deuxième groupe de brosses (62) par rapport au troisième groupe de brosses (63), le quatrième groupe de brosses (64) incluant une pluralité de poils qui sont disposés suivant la direction parallèle à la direction axiale,
les poils du troisième groupe de brosses (63) présentent des formes dont les longueurs saillantes depuis le corps de partie de nettoyage (50) augmentent progressivement du côté d'extrémité supérieure au côté d'extrémité inférieure de la partie formant tige (20),
les poils du quatrième groupe de brosses (64) présentent des formes dont les longueurs saillantes depuis le corps de partie de nettoyage (50) augmentent progressivement du côté d'extrémité supérieure au côté d'extrémité inférieure de la partie formant tige (20),
une longueur saillante depuis le corps de partie de nettoyage (50) du poil numéroté prédéterminé parmi les poils du troisième groupe de brosses (63) allant du côté d'extrémité supérieure au côté d'extrémité inférieure de la partie formant tige (20) est inférieure à une longueur saillante depuis le corps de partie de nettoyage (50) du poil numéroté prédéterminé parmi les poils du deuxième groupe de brosses (62) allant du côté d'extrémité supérieure au côté d'extrémité inférieure de la partie formant tige (20), et
une longueur saillante depuis le corps de partie de nettoyage (50) du poil numéroté prédéterminé parmi les poils du quatrième groupe de brosses (64) allant du côté d'extrémité supérieure au côté d'extrémité inférieure de la partie formant tige (20) est supérieure à une longueur saillante depuis le corps de partie de nettoyage (50) du poil numéroté prédéterminé parmi les poils du troisième groupe (63) allant du côté d'extrémité supérieure au côté d'extrémité inférieure de la partie formant tige (20),
**caractérisé en ce que**
la partie formant brosse (60) inclut en outre :
un cinquième groupe (65) présentant une forme faisant saillie vers l'extérieur dans la direction d'intersection à une position située sur la surface circonférentielle extérieure du corps de partie de nettoyage (50) qui est éloigné du quatrième groupe de brosses (64) dans la direction circonférentielle opposée au troisième groupe de brosses (63) par rapport au quatrième groupe de brosses (64), le cinquième groupe de brosses (65) incluant une pluralité de poils qui sont disposés suivant la direction parallèle à la direction axiale, et
un sixième groupe (66) présentant une forme faisant saillie vers l'extérieur dans la direction d'intersection à une position située sur la surface circonférentielle extérieure du corps de partie de nettoyage (50) qui est éloigné du cinquième groupe de brosses (65) dans la direction circonférentielle opposée au quatrième groupe de brosses (64) par rapport au cinquième groupe de brosses (65), le sixième groupe de brosses (66) incluant une pluralité de poils qui sont disposés suivant la direction parallèle à la direction axiale,
les poils du cinquième groupe de brosses (65) présentent des formes dont les longueurs saillantes depuis le corps de partie de nettoyage (50) augmentent progressivement du côté d'extrémité supérieure au côté d'extrémité inférieure de la partie formant tige (20),
les poils du sixième groupe de brosses (66) présentent des formes dont les longueurs saillantes depuis le corps de partie de nettoyage (50) augmentent progressivement du côté d'extrémité supérieure au côté d'extrémité inférieure de la partie formant tige (20),
une longueur saillante depuis le corps de partie de nettoyage (50) du poil numéroté prédéterminé parmi les poils du cinquième groupe de brosses (65) allant du côté d'extrémité supérieure au côté d'extrémité inférieure de la partie formant tige (20) est inférieure à une longueur saillante depuis le corps de partie de nettoyage (50) du poil numéroté prédéterminé parmi les poils du quatrième groupe de poils (64) allant du côté d'extrémité supérieure au côté d'extrémité inférieure de la partie formant tige (20),
une longueur saillante depuis le corps de partie de nettoyage (50) du poil numéroté prédéterminé parmi les poils du sixième groupe de brosses (66) allant du côté d'extrémité supérieure au côté d'extrémité inférieure de la partie formant tige (20) est supérieure à une longueur saillante depuis le corps de partie de nettoyage (50) du poil numéroté prédéterminé parmi les poils du cinquième groupe de brosses (65) allant du côté d'extrémité supérieure au côté d'extrémité inférieure de la partie formant tige (20),
un angle situé entre une direction dans laquelle le premier groupe de brosses (61) fait saillie depuis le corps de partie de nettoyage (50) et une direction dans laquelle le troisième groupe de brosses (63) fait saillie depuis le corps de partie de nettoyage (50) dans une section de coupe transversale perpendiculaire à l'axe qui est une section de coupe transversale perpendiculaire à la partie formant tige (20), et un angle situé entre une direction dans laquelle le troisième groupe de brosses (63) fait saillie depuis le corps de partie de nettoyage (50) et une direction dans laquelle le cinquième groupe de brosses (65) fait saillie depuis le corps de partie de nettoyage (50) dans la section de coupe transversale perpendiculaire à l'axe vont de 100 degrés à 140 degrés, inclus, et
un angle situé entre une direction dans laquelle le deuxième groupe de brosses (62) fait saillie depuis le corps de partie de nettoyage (50) et une direction dans laquelle le quatrième groupe de brosses (64) fait saillie depuis le corps de partie de nettoyage (50) dans la section de coupe transversale perpendiculaire à l'axe, et un angle situé entre une direction dans laquelle le quatrième groupe de brosses (64) fait saillie depuis le corps de partie de nettoyage (50) et une direction dans laquelle le sixième groupe de brosses (66) fait saillie depuis le corps de partie de nettoyage (50) dans la section de coupe transversale perpendiculaire à l'axe vont de 100 degrés à 140 degrés, inclus.

2. Instrument de nettoyage interdentaire (1) selon la revendication 1, dans lequel
des poils spécifiques numérotés parmi les groupes de brosses allant du côté d'extrémité supérieure au côté d'extrémité inférieure de la partie formant tige (20) sont agencés en spirale sur la surface circonférentielle extérieure du corps de partie de nettoyage (50).

3. Instrument de nettoyage interdentaire (1) selon la revendication 1 ou 2, dans lequel
la partie de nettoyage (40) est composée d'un matériau composite contenant un élastomère et un matériau de renforcement.
